# EUROPEAN PATENT SPECIFICATION

(11) **EP 3 680 116 B1**
(45) Date of publication and mention of the grant of the patent: **07.07.2021**
(21) Application number: 19215691.7
(22) Date of filing: 12.12.2019
(51) Int. Cl.: B60H 1/00, G08G 1/0967

(54) **VENTILATION CONTROL SYSTEM, VENTILATION CONTROL PROGRAM, AND METHOD FOR CONTROLLING VENTILATION CONTROL SYSTEM**
BELÜFTUNGSSTEUERUNGSSYSTEM, BELÜFTUNGSSTEUERUNGSPROGRAMM UND VERFAHREN ZUR STEUERUNG EINES BELÜFTUNGSSTEUERUNGSSYSTEMS
SYSTÈME DE COMMANDE DE VENTILATION, PROGRAMME DE COMMANDE DE VENTILATION ET PROCÉDÉ DE COMMANDE D'UN SYSTÈME DE VENTILATION

(30) Priority: 10.01.2019 JP 2019002361
(43) Date of publication of application: 15.07.2020
(73) Proprietor: Toyota Jidosha Kabushiki Kaisha, Aichi-Ken 471-8571 (JP)
(72) Inventor: HOSHINO, Yu, TOYOTA-SHI, AICHI-KEN, 471-8571 (JP); JINNO, Kunihiko, TOYOTA-SHI, AICHI-KEN, 471-8571 (JP)
(74) Representative: Cabinet Beau de Loménie

(56) References cited:
- DE-A1-102004 004 302
- DE-A1-102015 221 484
- DE-A1-102018 101 378
- US-A1- 2014 330 453
- US-B2- 10 093 253

## Description

### BACKGROUND

### 1. Field

The present invention relates to a ventilation control system, a ventilation control program, and a method for controlling a ventilation control system.

### 2. Description of Related Art

Japanese Laid-Open Patent Publication No. 2014-104774 describes a vehicle that includes a control switch allowing a window to automatically open and close, an exterior temperature sensor detecting a vehicle ambient temperature, and an interior temperature sensor detecting a vehicle interior temperature. The vehicle described above opens the window to perform ventilation when three conditions are all satisfied. More specifically, the above-described vehicle is ventilated when the control switch is switched to the ON state by the user of the vehicle, the vehicle interior temperature is not appropriate, and the vehicle ambient temperature is appropriate.

In the above-described vehicle, when the control switch is not switched to the ON state in advance by the user of the vehicle, the vehicle will not be ventilated even when the other conditions are satisfied. Thus, for example, when the user forgets to operate the control switch, the above-described vehicle will not be ventilated in a situation in which the user wishes to ventilate the vehicle. German patent application publication DE 10 2015 221484 A1 discloses a method of operating a vehicle air conditioning device in a manner transparent to the user.

### SUMMARY

An aspect of the present invention provides a ventilation control system according to claim 1.

An aspect of the present invention provides a ventilation control program according to claim 5.

An aspect of the present invention provides a method according to claim 6 for controlling the ventilation control system according to claim 1.

Other features and aspects will be apparent from the following detailed description, the drawings, and the claims.

### BRIEF DESCRIPTION OF THE DRAWINGS

Fig. 1 is a schematic diagram of a ventilation control system.
Fig. 2 is a flowchart showing a series of processes related to ventilation control.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the invention. Descriptions of functions and constructions that are well known to one of ordinary skill in the art may be omitted.

Exemplary embodiments may have different forms, and are not limited to the examples described. However, the examples described are thorough and complete, and convey the full scope of the invention to one of ordinary skill in the art.

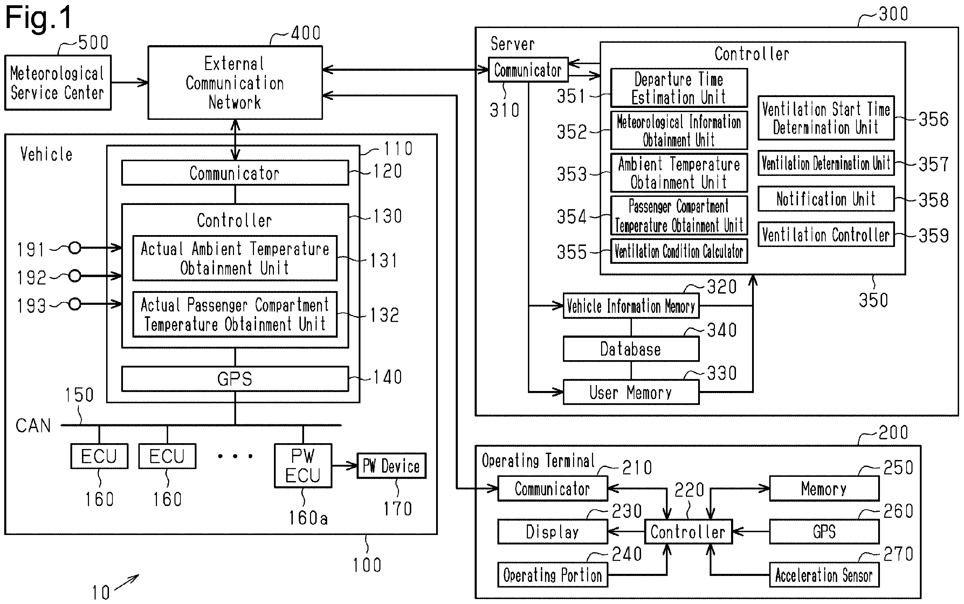

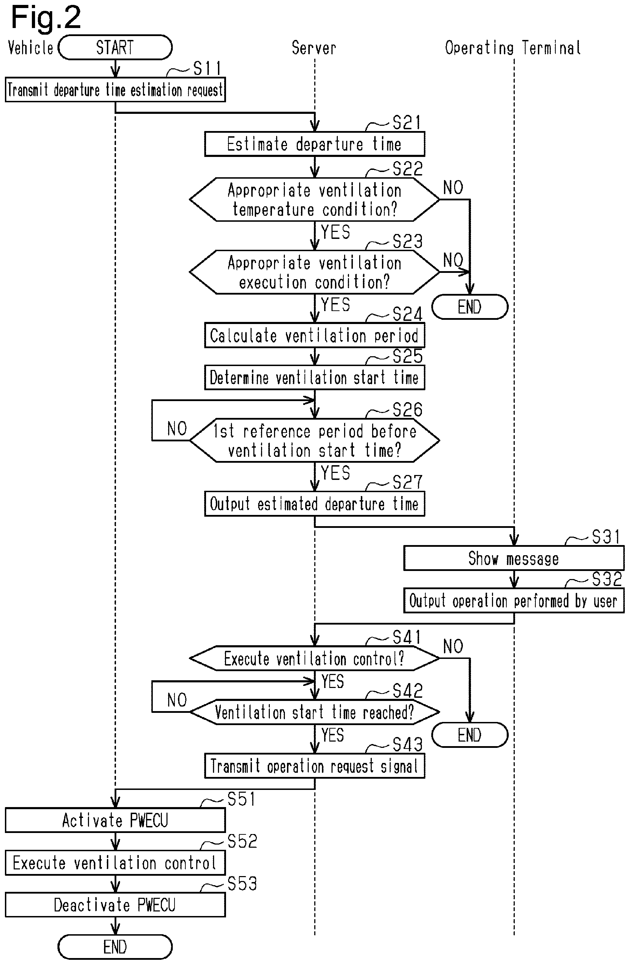

An embodiment of a ventilation control system installed on an electric automobile will now be described with reference to Figs. 1 and 2.

The entire configuration of a ventilation control system10 will now be described.

As shown in Fig. 1, the ventilation control system 10 includes a control module 110 installed on a vehicle 100, an operating terminal 200, and a server 300 that collects and stores information on the vehicle 100. The control module 110, the operating terminal 200, and the server 300 are configured to perform information communication with each other through an external communication network 400.

The control module 110 of the vehicle 100 includes a communicator 120 that performs information communication with the server 300 through the external communication network 400, a controller 130 that executes various calculations and controls the information communication performed by the communicator 120 and transmission and reception of signals to and from ECUs 160, which will be described later, and a GPS 140 that detects the coordinate of the current position of the vehicle 100. In the present embodiment, the control module 110 incorporates a battery, which is not shown in the drawings. Hence, even when the external supply of power is cut off, the control module 110 is capable of receiving information sent to the control module 110.

The controller 130 receives a signal indicating a state of the vehicle 100 switched by a start switch 191 of the vehicle 100. The start switch 191 switches the state of the vehicle 100 between three states, namely, the OFF state, the ACC state, and the ON state. In the OFF state, the ECUs 160 (described later) are not supplied with power. When the vehicle 100 is in the OFF state and the start switch 191 is pushed, the vehicle 100 is switched to the ACC state. In the ACC state, the ECUs 160 (described later) are supplied with power from a low-voltage battery (not shown) but are not supplied with power from a high-voltage battery (not shown). In the ACC state, while various electric accessories installed on the vehicle 100 may be driven, the vehicle 100 cannot travel because power is not supplied to the drive motor. When the vehicle 100 is in the OFF state or the ACC state and the start switch 191 is pushed with the brake pedal depressed, the vehicle 100 is switched to the ON state. In the ON state, power is supplied from both the low-voltage battery and the high-voltage battery. More specifically, in the ON state, the vehicle 100 is allowed to travel. When the vehicle 100 is in the ON state and the start switch 191 is pushed, the vehicle 100 is switched to the OFF state. In addition to the ON state, the ACC state, and the OFF state, the vehicle 100 may enter a state in which only some of the ECUs 160 are supplied with power from the low-voltage battery.

When the vehicle 100 is switched to the ON state, the controller 130 transmits a signal indicating that the system of the vehicle 100 has been activated from the communicator 120 to the external communication network 400. In addition, when the vehicle 100 is in the ON state, the controller 130 transmits the coordinate of the current position of the vehicle 100 detected by the GPS 140 from the communicator 120 to the external communication network 400 at regular intervals. In the present embodiment, the communicator 120 transmits the coordinate of the current position of the vehicle 100 to the external communication network 400 at one-minute intervals. In addition, the controller 130 executes part of a series of processes related to the ventilation control prior to departure of the vehicle 100. The configuration of the controller 130 related to the ventilation control will be described later in detail.

The control module 110 is connected to a CAN communication line 150 of a CAN communication system. The ECUs 160 are also connected to the CAN communication line 150 to control the vehicle 100. The control module 110 is configured to transmit and receive various signals to and from the ECUs 160 through the CAN communication line 150.

The vehicle 100 includes a PWECU 160a, which is one of the ECUs 160 that controls operation of a power window device 170 of the vehicle 100. The power window device 170 drives a window of the vehicle 100 toward an opening side or a closing side. In the present embodiment, the power window device 170 is a ventilation device.

In the present embodiment, the operating terminal 200 is a mobile phone such as a smartphone carried by the user of the vehicle 100. The operating terminal 200 includes a communicator 210 configured to perform information communication with the server 300 through the external communication network 400 and a controller 220 that controls information communication performed by the communicator 120 and executes various calculations. The controller 220 executes part of a series of processes related to the ventilation control.

The operating terminal 200 further includes a display 230 that shows an output from the controller 220. The display 230 shows a message or an operation icon based on image information output from the controller 220.

The operating terminal 200 includes an operating portion 240 configured to input information to the controller 220. When the operating portion 240 is operated, an operating signal is input to the controller 220. In the present embodiment, the display 230 is a touchscreen, and the display 230 includes the operating portion 240.

The operating terminal 200 includes a memory 250 that stores application programs and various kinds of data. When to the controller 220 receives a signal for activating an application program from the operating portion 240 or the server 300, the application program stored in the memory 250 runs.

The operating terminal 200 includes a GPS 260 that detects the coordinate of the current position of the operating terminal 200. The coordinate of the current position of the operating terminal 200 detected by the GPS 260 is input to the controller 220.

The operating terminal 200 includes an acceleration sensor 270 that measures acceleration of the operating terminal 200. The acceleration of the operating terminal 200 detected by the acceleration sensor 270 is input to the controller 220.

The server 300 includes a communicator 310 configured to perform information communication with the control module 110 and the operating terminal 200 through the external communication network 400 and a controller 350 that controls the information communication performed by the communicator 310 and executes various calculations. In addition, the controller 350 executes part of a series of processes related to the ventilation control. The configuration of the controller 350 related to the ventilation control will be described later in detail.

The server 300 further includes a vehicle information memory 320 that controls vehicle information and a user memory 330 that controls user information. The vehicle information memory 320 and the user memory 330 share a database 340 that stores the vehicle information and the user information. The database 340 stores association information that associates information on the vehicle 100 with information on the user of the vehicle 100. More specifically, the database 340 links the information on the vehicle 100 with the information on the user of the vehicle 100.

In the ventilation control system 10, the database 340 of the server 300 stores vehicle information received from the control module 110. The server 300 also stores user information received from the operating terminal 200. For example, when receiving a signal indicating that the vehicle 100 has entered the ON state, the vehicle information memory 320 stores the time at which the signal is received as a vehicle activation time. The vehicle activation time in the past few months is stored for each vehicle 100.

The configuration of the controller 130 in the control module 110 related to the ventilation control will now be described.

The controller 130 of the control module 110 includes an actual ambient temperature obtainment unit 131 that obtains an actual ambient temperature OT1. The actual ambient temperature obtainment unit 131 receives a signal indicating the actual ambient temperature OT1 from an ambient temperature sensor 192 to obtain the actual ambient temperature OT1. The ambient temperature sensor 192 measures a temperature outside the vehicle 100. The measured value of the temperature outside the vehicle 100 is the actual ambient temperature OT1. The ambient temperature sensor 192 transmits a signal indicating the actual ambient temperature OT1 to the actual ambient temperature obtainment unit 131.

The controller 130 of the control module 110 includes an actual passenger compartment temperature obtainment unit 132 that obtains an actual passenger compartment temperature RT1. The actual passenger compartment temperature obtainment unit 132 receives a signal indicating the actual passenger compartment temperature RT1 from a passenger compartment temperature sensor 193 to obtain the actual passenger compartment temperature RT1. The passenger compartment temperature sensor 193 measures a passenger compartment temperature of the vehicle 100. The measured value of the passenger compartment temperature of the vehicle 100 is the actual passenger compartment temperature RT1. The passenger compartment temperature sensor 193 transmits a signal indicating the actual passenger compartment temperature RT1 to the actual passenger compartment temperature obtainment unit 132.

The controller 130, or a computer, runs programs stored in the controller 130 to implement each of the processes executed by the actual ambient temperature obtainment unit 131 and the actual passenger compartment temperature obtainment unit 132.

The configuration of the controller 350 in the server 300 related to the ventilation control will now be described.

The controller 350 of the server 300 includes a departure time estimation unit 351 that estimates a departure time of the vehicle 100, that is, an estimated time at which the user enters the vehicle 100 and starts the vehicle 100.

In the present embodiment, the departure time estimation unit 351 determines that the vehicle activation time, at which the vehicle 100 entered the ON state, stored by the vehicle information memory 320 in the database 340 is a time at which the vehicle 100 was started in the past. The departure time estimation unit 351 takes statistics of the frequency of departures of the vehicle 100 and the time of each departure in the past twenty-four hours. The statistics estimates that the vehicle 100 will enter the ON state at a time when the frequency of departures of the vehicle 100 is greater than a predetermined threshold value. The departure time estimation unit 351 estimates that an estimated time at which the vehicle 100 enters the ON state for the first time after the current time is the departure time of the vehicle 100 at which the vehicle 100 starts to travel the next time. An example of the departure time estimating process executed by the departure time estimation unit 351 is a technique disclosed in Japanese Laid-Open Patent Publication No. 2013-233013.

The controller 350 of the server 300 includes a meteorological information obtainment unit 352 that obtains meteorological information. The meteorological information obtainment unit 352 obtains meteorological information from a meteorological service center 500 through the external communication network 400. The meteorological information includes, for example, information about the ambient temperature, which is the temperature outside the vehicle 100, information about weather such as precipitation, information about a pollen dispersal amount, and information about a particulate matter dispersal amount. The meteorological information further includes information on weather at the current time and forecast information on the weather after a fixed time.

The controller 350 of the server 300 includes an ambient temperature obtainment unit 353 that obtains an ambient temperature OT2 at a departure time of the vehicle 100. The ambient temperature OT2 at the departure time of the vehicle 100 is an estimated value of the temperature outside the vehicle 100 at the departure time of the vehicle 100. In the present embodiment, the ambient temperature obtainment unit 353 estimates an ambient temperature OT2 based on meteorological information obtained by the meteorological information obtainment unit 352 and the coordinate of the current position obtained by the GPS140 of the vehicle 100 to obtain the estimated ambient temperature OT2.

The controller 350 of the server 300 includes a passenger compartment temperature obtainment unit 354 that obtains a passenger compartment temperature RT2 of the vehicle 100 at the departure time. The passenger compartment temperature RT2 of the vehicle 100 at the departure time is an estimated value of the passenger compartment temperature of the vehicle 100 when ventilation is not performed. In the present embodiment, the passenger compartment temperature obtainment unit 354 estimates the passenger compartment temperature RT2 based on the actual ambient temperature OT1, the ambient temperature OT2 at the departure time, the actual passenger compartment temperature RT1, the time at which the actual ambient temperature OT1 and the actual passenger compartment temperature RT1 are obtained, and the departure time. For example, the passenger compartment temperature obtainment unit 354 estimates that the passenger compartment temperature RT2 increases as the actual ambient temperature OT1, the ambient temperature OT2, and the actual passenger compartment temperature RT1 increase.

The controller 350 of the server 300 includes a ventilation condition calculator 355 that calculates an operation condition of the power window device 170 and a ventilation period for which the power window device 170 performs ventilation. The ventilation condition calculator 355 calculates an operation condition of the power window device 170 to calculate a ventilation period that allows the difference between the ambient temperature OT2 and the passenger compartment temperature RT2 to be within a preset specified temperature difference A under the operation condition. The operation condition of the power window device 170 is an opening-closing width of the window driven by the power window device 170.

The controller 350 of the server 300 includes a ventilation start time determination unit 356 that determines a ventilation start time, at which the power window device 170 starts the ventilation. The ventilation start time determination unit 356 determines that the ventilation start time is a time earlier than an estimated departure time by the ventilation period.

The controller 350 of the server 300 includes a ventilation determination unit 357 that determines whether the vehicle 100 needs to be ventilated based on the meteorological information. More specifically, the ventilation determination unit 357 determines whether the vehicle 100 is in an appropriate ventilation temperature condition based on the ambient temperature OT2 at the departure time and the passenger compartment temperature RT2 at the departure time. The ventilation determination unit 357 also determines whether extraneous objects may enter the passenger compartment of the vehicle 100 when ventilation is performed. The ventilation determination unit 357 determines whether the vehicle 100 needs to be ventilated based on the two above-described determinations. More specifically, the ventilation determination unit 357 temporarily determines whether to ventilate the vehicle 100 based on the meteorological information (first determination).

The controller 350 of the server 300 includes a notification unit 358 that transmits a notification for inquiring whether to permit ventilation to the operating terminal 200 when the ventilation determination unit 357 determines that the vehicle 100 needs to be ventilated.

The controller 350 of the server 300 includes a ventilation controller 359 that outputs an operation request signal for requesting operation of the power window device 170. The ventilation controller 359 transmits the operation request signal to the control module 110 of the vehicle 100 based on a reply to the notification of the notification unit 358 from the operating terminal 200. More specifically, the ventilation controller 359 determines whether to ventilate the vehicle 100 based on the reply to the notification of the notification unit 358 from the operating terminal 200 (formal determination, or second determination). When the control module 110 of the vehicle 100 receives the operation request signal, the operation request signal is input to the PWECU 160a through the control module 110. The PWECU 160a drives the power window device 170 so that the opening-closing width of the window of the vehicle 100 conforms to a preset base width. In the present embodiment, the base width is a fixed value and is, for example, a few centimeters.

The controller 350, or a computer, runs programs stored in the controller 350 to implement each of the processes executed by the departure time estimation unit 351, the meteorological information obtainment unit 352, the ambient temperature obtainment unit 353, the passenger compartment temperature obtainment unit 354, the ventilation condition calculator 355, the ventilation start time determination unit 356, the ventilation determination unit 357, the notification unit 358, and the ventilation controller 359.

A series of processes related to the ventilation control in the ventilation control system 10 will now be described with reference to Fig. 2. When the start switch 191 is pushed so that the vehicle 100 is switched to the OFF state, the controller 130 of the control module 110 starts the ventilation control in the present embodiment.

In step S11, the controller 130 of the control module 110 transmits a signal indicating a departure time estimation request to the server 300. At the same time, the controller 130 transmits a signal indicating the actual ambient temperature OT1 and a signal indicating the actual passenger compartment temperature RT1. Subsequently, the power supplied to the ECUs 160 of the vehicle 100 is cut off. More specifically, the vehicle 100 enters the OFF state. The power supplied to the control module 110 is also cut off. However, the control module 110 enters a standby state that allows reception of information from the server 300.

When the departure time estimation request is input to the server 300, the controller 350 of the server 300 proceeds to step S21. In step S21, the departure time estimation unit 351 of the controller 350 estimates a departure time (hereafter, referred to as estimated departure time), that is, an estimated time at which the user enters the vehicle 100 and starts the vehicle 100 based on vehicle information and user information. The controller 350 of the server 300 proceeds to step S22.

In step S22, the ventilation determination unit 357 of the controller 350 determines whether the vehicle 100 is in a ventilation temperature condition that is appropriate for ventilation at the departure time estimated in step S21 based on the meteorological information. Whether the vehicle 100 needs to be ventilated is determined based partially on whether the vehicle 100 is in the ventilation temperature condition appropriate for ventilation at the estimated departure time. More specifically, the ventilation determination unit 357 determines that the ventilation needs to be performed if both of the two conditions, that is, the ambient temperature OT2 is in a preset appropriate temperature range at the departure time, and the difference between the ambient temperature OT2 at the departure time and the passenger compartment temperature RT2 at the departure time is greater than the specified temperature difference A, are satisfied. If not, the ventilation determination unit 357 determines that the ventilation does not need to be performed. The appropriate temperature range is, for example, 18°C to 28°C. The specified temperature difference A is, for example, 10°C. If it is determined in step S22 that the ventilation does not need to be performed (S22: NO), the controller 350 of the server 300 ends the series of the current processes related to the ventilation control. If it is determined in step S22 that the ventilation needs to be performed (S22: YES), the controller 350 of the server 300 proceeds to step S23.

In step S23, the ventilation determination unit 357 of the controller 350 determines whether extraneous objects may enter the passenger compartment of the vehicle 100 if the vehicle 100 is ventilated at the departure time based on the meteorological information. Whether the vehicle 100 needs to be ventilated is determined based partially on whether extraneous objects may enter the passenger compartment of the vehicle 100 if the vehicle 100 is ventilated at the departure time. More specifically, when the precipitation probability is less than a preset probability based on weather information such as precipitation in the meteorological information at the departure time, the ventilation determination unit 357 determines that rain or snow does not enter as an extraneous object. In addition, when the pollen amount is less than a predetermined pollen amount based on information about the pollen dispersal amount at the departure time, the ventilation determination unit 357 determines that pollen does not enter as an extraneous object. Further, the ventilation determination unit 357 determines that particulate matter does not enter as an extraneous object, when the amount of dispersed particulate matter is less than a preset amount of particulate matter based on information about the particulate matter dispersal amount. If it is determined that any one of rain or snow, pollen, and particulate matter may enter the passenger compartment of the vehicle 100 as an extraneous object, the ventilation determination unit 357 determines that the condition is not appropriate for ventilation. If it is determined that none of rain or snow, pollen, and particulate matter may enter as an extraneous object, the ventilation determination unit 357 determines that the condition is appropriate for ventilation.

If the ventilation determination unit 357 determines in step S23 that the weather condition is not appropriate for ventilation (S23: NO), the controller 350 of the server 300 ends the series of the current processes related to the ventilation control. If the ventilation determination unit 357 determines in step S23 that the weather condition is appropriate for ventilation (S23: YES), the controller 350 of the server 300 proceeds to step S24. As described above, through steps S22 and S23, the ventilation determination unit 357 temporarily determines whether to ventilate the vehicle 100 based on the meteorological information (first determination).

In step S24, the ventilation condition calculator 355 of the controller 350 calculates a ventilation period that allows the difference between the ambient temperature OT2 and the passenger compartment temperature RT2 to be within the preset specified temperature difference A through the ventilation control. More specifically, the ventilation condition calculator 355 calculates the ventilation period based on the ambient temperature OT2 at the departure time, the passenger compartment temperature RT2 at the departure time, and the opening-closing width of the window driven by the power window device 170. For example, the ventilation condition calculator 355 performs calculation so that the ventilation period extends as the difference between the ambient temperature OT2 and the passenger compartment temperature RT2 increases. In the present embodiment, as described above, the opening-closing width of the window driven by the power window device 170 is a preset fixed base width. Thus, the ventilation condition calculator 355 calculates the ventilation period based on the opening-closing width of the window being the base width. The controller 350 of the server 300 proceeds to step S25.

In step S25, the ventilation start time determination unit 356 of the controller 350 determines that the ventilation start time is a time earlier than the estimated departure time calculated in step S21 by the ventilation period calculated in step S24. The controller 350 of the server 300 proceeds to step S26.

In step S26, the controller 350 determines whether the current time reaches a time earlier than the ventilation start time by a first reference period. In the present embodiment, the first reference period is set to fifteen minutes in advance. If it is determined that the current time has not reached the time earlier than the ventilation start time by the first reference period (S26: NO), the controller 350 repeats step S26 in a predetermined time. If the controller 350 determines in step S26 that the current time has reached the time earlier than the ventilation start time by the first reference period (S26: YES), the controller 350 proceeds to step S27.

In step S27, the notification unit 358 of the controller 350 transmits a notifying signal for asking the user of the vehicle 100 whether to permit or reject the ventilation and a signal indicating the estimated departure time to the operating terminal 200.

When the operating terminal 200 receives the signals output from the notification unit 358 of the server 300, the controller 220 of the operating terminal 200 proceeds to step S31. In step S31, the controller 220 of the operating terminal 200 shows, on the display 230, the estimated departure time and a message asking the user of the vehicle 100 whether the ventilation is performed by the estimated departure time. The controller 220 of the operating terminal 200 proceeds to step S32.

In step S32, the controller 220 of the operating terminal 200 transmits an operating instruction of the user to the server 300. More specifically, when the operating portion 240 is operated so that the ventilation is performed, the controller 220 of the operating terminal 200 transmits a signal indicating that the ventilation is to be performed. When the operating portion 240 is operated so that the ventilation is not performed, the controller 220 of the operating terminal 200 transmits a signal indicating that the ventilation is not to be performed. When the operating portion 240 is not operated in a predetermined amount of a second reference period, the controller 220 of the operating terminal 200 transmits a signal indicating that the operating portion 240 is not operated. Thus, the signal transmitted in step S32 represents a reply to the notifying signal output by the notification unit 358 in step S27. In the present embodiment, the second reference period is set to be shorter than the first reference period and is, for example, ten minutes.

When the server 300 receives the signal output from the controller 220 of the operating terminal 200, the controller 350 of the server 300 proceeds to step S41. In step S41, the ventilation controller 359 of the controller 350 determines whether to perform ventilation (formal determination, or second determination). More specifically, if it is determined that the server 300 receives a signal indicating that the ventilation is to be performed, the ventilation controller 359 determines that the ventilation is permitted. If it is determined that the server 300 receives a signal indicating that the ventilation is not to be performed, the ventilation controller 359 determines that the ventilation is rejected. If it is determined that the server 300 receives a signal indicating that the operating portion 240 is not operated, the ventilation controller 359 determines that the ventilation is rejected. If it is determined in step S41 that the ventilation is rejected (S41: NO), the controller 350 of the server 300 ends the series of the current processes related to the ventilation control. If it is determined in step S41 that the ventilation is permitted (S41: YES), the controller 350 of the server 300 proceeds to step S42.

In step S42, the controller 350 determines whether the current time reaches the ventilation start time. If the controller 350 determines that the current time has not reached the ventilation start time (S42: NO), the controller 350 repeats step S42 in a predetermined time. If the controller 350 determines in step S42 that the current time has reached the ventilation start time (S42: YES), the controller 350 proceeds to step S43.

In step S43, the ventilation controller 359 of the controller 350 transmits an operation request signal for requesting ventilation performed by the power window device 170 to the control module 110 of the vehicle 100. More specifically, if a reply to the notification indicates that the ventilation is permitted, the ventilation controller 359 outputs the operation request signal. As described above, if it is determined in step S41 that the ventilation is rejected, the series of the current processes related to the ventilation control ends. Thus, if a reply to the notification indicates that the ventilation is rejected, the ventilation controller 359 will not output the operation request signal even when the ventilation determination unit 357 determines that the ventilation needs to be performed.

When the control module 110 of the vehicle 100 receives the operation request signal, the controller 130 of the control module 110 proceeds to step S51. In step S51, the controller 130 of the control module 110 performs control so that the controller 130 and the PWECU 160a are supplied with power from a battery (not shown). This activates the controller 130 from the standby state and also activates the PWECU 160a. The controller 130 of the control module 110 proceeds to step S52.

In step S52, the controller 130 of the control module 110 performs control so that the PWECU 160a drives the power window device 170 to set the opening-closing width of the window of the vehicle 100 to the base width. The controller 130 of the control module 110 proceeds to step S53.

In step S53, the controller 130 of the control module 110 stops the supply of power to the PWECU 160a from the battery (not shown) so that the PWECU 160a enters the OFF state. The controller 130 pf the control module 110 ends the series of the current processes related to the ventilation control.

The operation and advantages of the present embodiment will now be described.
(1) In the present embodiment, the notification unit 358 of the controller 350 transmits a notifying signal for asking the user of the vehicle 100 whether to permit or reject ventilation to the operating terminal 200. The display 230 of the operating terminal 200 shows a message asking the user of the vehicle 100 whether to ventilate the vehicle 100. Thus, the user of the vehicle 100 does not have to operate a switch or the like to ventilate the vehicle 100. The user of the vehicle 100 is asked whether to permit the ventilation. This reduces situations in which the user of the vehicle 100 forgets to operate the switch or the like when ventilation is needed, and the ventilation is not performed. In the present embodiment, when it is determined that the ventilation needs to be performed based on the meteorological information, the notification unit 358 transmits a notifying signal to the operating terminal 200 to ask the user of the vehicle 100 whether to permit ventilation. More specifically, when it is temporarily determined to ventilate the vehicle 100 based on the meteorological information, the user of the vehicle 100 is asked whether to permit the ventilation. This avoids a situation in which the user of the vehicle 100 is bothered by an inquiry about whether to permit ventilation even when the ventilation does not need to be performed. More specifically, in a condition inappropriate for ventilation, the user will not be bothered by an inquiry.
(2) In the present embodiment, the ventilation condition calculator 355 calculates a ventilation period that allows the difference between the ambient temperature OT2 and the passenger compartment temperature RT2 to be within the specified temperature difference A through the ventilation control. The ventilation start time determination unit 356 determines that the ventilation start time is a time earlier than the estimated departure time by the ventilation period. Thus, when ventilation is performed from the determined ventilation start time, the difference between the actual ambient temperature and the actual passenger compartment temperature is highly likely to be within the specified temperature difference A at the estimated departure time. This reduces situations in which the difference between the actual ambient temperature and the actual passenger compartment temperature remains large due to a short ventilation period.
(3) In the present embodiment, before the ventilation start time, the notification unit 358 of the server 300 outputs a signal for inquiring whether to permit or reject ventilation. More specifically, at the time earlier than the ventilation start time by the first reference period (fifteen minutes), the notification unit 358 outputs a signal for inquiring whether to permit the ventilation. The display 230 of the operating terminal 200 shows a message asking the user of the vehicle 100 whether to perform ventilation at a time relatively close to the ventilation start time. This allows the user of the vehicle 100 to determine whether to perform ventilation at a time relatively close to the ventilation start time. Thus, the present embodiment readily reflects the will of the user of the vehicle 100 immediately before the ventilation start time.
(4) In the present embodiment, at the time earlier than the ventilation start time by the first reference period (fifteen minutes), the notification unit 358 of the server 300 transmits a signal for inquiring whether to permit ventilation to the operating terminal 200. The controller 220 of the operating terminal 200 transmits an operating instruction of the user to the server 300. At this time, even when the user does not operate the operating portion 240 of the operating terminal 200 in the second reference period (ten minutes), the controller 220 of the operating terminal 200 transmits a signal to the server 300. Thus, before the ventilation start time, the server 300 receives a signal representing a reply to the notifying signal output by the notification unit 358. The present embodiment allows the ventilation controller 359 to determine whether ventilation is permitted before the ventilation start time.
(5) In the present embodiment, when the user of the vehicle 100 operates the operating terminal 200, the ventilation controller 359 of the server 300 determines whether to ventilate the vehicle 100 (formal determination, or second determination) in accordance with a signal output from the operating terminal 200. If the vehicle 100 includes the ventilation controller 359, the ventilation controller 359 makes a determination using power of the vehicle 100 even when the user of the vehicle 100 rejects ventilation. In this regard, in the present embodiment, until the control module 110 of the vehicle 100 receives an operation request signal from the ventilation controller 359 of the server 300, the controller 130 of the control module 110 stops the supply of power to the PWECU 160a. This reduces power consumption of the vehicle 100 until the ventilation start time.
(6) In the present embodiment, the power window device 170 opens the window of the vehicle 100 to perform ventilation. When the window of the vehicle 100 is open, the risk of crimes may increase. In the present embodiment, a notification for inquiring whether to permit ventilation is issued to the user of the vehicle 100. Thus, the risk of crimes may be avoided.

The present embodiment may be modified as follows. The present embodiment and the following modified examples may be combined as long as the combined modified examples remain technically consistent with each other.

In the embodiment, the configuration for obtaining the actual ambient temperature OT1 may be changed. For example, the actual ambient temperature obtainment unit 131 of the vehicle 100 may estimate the ambient temperature on the coordinate of the current position of the vehicle 100 at the current time based on the meteorological information obtained by the meteorological information obtainment unit 352 from the meteorological service center 500 and the coordinate of the current position obtained by the GPS140 of the vehicle 100. The actual ambient temperature OT1 obtained by the actual ambient temperature obtainment unit 131 may be an estimated ambient temperature. In this case, the ambient temperature sensor 192 may be omitted.

In the embodiment, the configuration for obtaining the actual passenger compartment temperature RT1 may be changed. For example, the actual passenger compartment temperature obtainment unit 132 may estimate the actual passenger compartment temperature RT1 based on the actual ambient temperature OT1. In this case, the passenger compartment temperature sensor 193 may be omitted.

In the embodiment, the ventilation device may be changed. For example, the ventilation device may be a driver that drives a sunroof of the vehicle 100. In this case, the ventilation condition calculator 355 may calculate the ventilation period in accordance with the opening-closing width of the sunroof of the vehicle 100. For example, the ventilation condition calculator 355 may calculate a ventilation period that shortens as the opening-closing width of the sunroof increases.

Alternatively, for example, the ventilation device may be an air blower of the vehicle 100 configured to exchange the air outside the vehicle with the air in the passenger compartment. In this case, the operation condition of the ventilation device is the rotation speed of a fan of the air blower. For example, the ventilation condition calculator 355 may calculate a ventilation period that shortens as the rotation speed of the fan increases.

In the embodiment, the condition for determining whether ventilation needs to be performed with the ventilation determination unit 357 may be changed. For example, the ventilation determination unit 357 may omit one of the process determining whether the vehicle 100 is in the appropriate ventilation temperature condition, which is appropriate for ventilation, at the departure time and the process determining whether extraneous objects may enter the passenger compartment of the vehicle 100 if the vehicle 100 is ventilated at the departure time. Also, in this case, the ventilation determination unit 357 determines whether the vehicle 100 needs to be ventilated based on the meteorological information. This limits the inquiry of the user in a condition that is not appropriate for ventilation. When the process determining whether the vehicle 100 is in the appropriate ventilation temperature condition, which is appropriate for ventilation, at the departure time is omitted, the ambient temperature obtainment unit 353 and the passenger compartment temperature obtainment unit 354 may be omitted.

In the embodiment, the notification timing of the notification unit 358 may be changed. For example, immediately after the ventilation start time is determined, the notification unit 358 may transmit a notifying signal to the operating terminal 200. Step S26 may be omitted from this configuration. For example, when the ventilation start time is reached, the notification unit 358 may transmit a notifying signal to the operating terminal 200. In this configuration, the ventilation may be performed before the departure time.

In an emboddiment not being part of the invention, the process for determining the ventilation start time executed by the ventilation start time determination unit 356 may be changed. For example, the ventilation start time determination unit 356 may determine that the ventilation start time is a time earlier than the estimated departure time by a fixed amount of time regardless of length of the ventilation period. In this case, the process for calculating the ventilation period may be omitted from the ventilation condition calculator 355.

In the embodiment, the process for calculating the operation condition and the ventilation period executed by the ventilation condition calculator 355 may be changed. For example, when the opening-closing width of the window driven by the power window device 170 is variably controlled in accordance with situations, the ventilation condition calculator 355 may calculate the ventilation period in accordance with the opening-closing width of the window that is variably controlled. For example, the ventilation condition calculator 355 may calculate a ventilation period that shortens as the opening-closing width of the window driven by the power window device 170 increases.

In the embodiment, the process for determining the departure time executed by the departure time estimation unit 351 may be changed. For example, whether the vehicle 100 is moving may be determined based on data on the coordinate of the current position detected by the GPS140 of the vehicle 100 to make statistics of the frequency and times of departures of the vehicle 100 in the past. The departure time of the vehicle 100 may be estimated based on the statistics.

For example, the departure time estimation unit 351 may estimate the departure time based on information from the operating terminal 200. More specifically, acceleration is measured by the acceleration sensor 270 of the operating terminal 200 and input to the controller 220 of the operating terminal 200. The controller 220 determines that the acceleration is greater than a predetermined threshold value. The threshold value may be set to an acceleration that is obtained when the user performs an action expected before departure such as brushing teeth, changing clothes, cooking, or exercising. The controller 220 transmits a signal indicating a time at which the acceleration is increased to the server 300. In addition, the database 340 of the server 300 stores the frequency and times of increases in the acceleration of the user. The departure time estimation unit 351 may estimate that the vehicle 100 will depart after a fixed amount of time from when the acceleration is increased. In this case, it may be assumed that the time from when the user performs an action expected before departure to when the user enters the vehicle 100 and starts the vehicle 100 is substantially fixed. Thus, the departure time of the vehicle 100 is estimated.

For example, the departure time estimation unit 351 may estimate the departure time of the vehicle 100 based on data of the coordinate of the current position of the vehicle 100 detected by the GPS 140 of the vehicle 100 and data of the coordinate of the current position of the operating terminal 200 detected by the GPS 260 of the operating terminal 200. In this case, in the same manner as the GPS 140 of the vehicle 100, the GPS 260 of the operating terminal 200 outputs data on the coordinate of the current position of the operating terminal 200 at regular intervals. In addition, the database 340 of the server 300 stores data on the coordinate of the current position of the vehicle 100 and data on the coordinate of the current position of the operating terminal 200. The departure time estimation unit 351 of the server 300 detects times at which the coordinate of the current position of the vehicle 100 becomes equal to the coordinate of the current position of the operating terminal 200 from a state in which the coordinates differ from each other and takes statistics of the frequency and the times. From the statistics, the departure time estimation unit 351 may estimate that a time at which the coordinate of the current position of the vehicle 100 becomes equal to the coordinate of the current position of the operating terminal 200 from a state in which the coordinates differ from each other is the departure time of the vehicle 100.

For example, when the user inputs schedule information to the memory 250 of the operating terminal 200, and the schedule information includes a planned departure time input by the user, the departure time estimation unit 351 may estimate that the planned departure time is the departure time of the vehicle 100.

In the embodiment, instead of the time determination process executed in step S26, another time determination process may be executed between steps S21 to S27. For example, the controller 350 of the server 300 may determine whether the current time reaches a time earlier than the departure time by a third reference period between step S21 and step S22. Also, in this case, before the departure time, the notification unit 358 of the controller 350 outputs a notifying signal for asking the user of the vehicle 100 whether to permit ventilation. The third reference period may be set to be greater than the second reference period and may be, for example, a few dozen minutes to a few hours.

In the embodiment, the departure time estimation unit 351, the meteorological information obtainment unit 352, the ambient temperature obtainment unit 353, the passenger compartment temperature obtainment unit 354, the ventilation condition calculator 355, the ventilation start time determination unit 356, the ventilation determination unit 357, the notification unit 358, and the ventilation controller 359 may be mounted on any position of the ventilation control system 10. For example, when the ventilation control system 10 is configured by only the control module 110 of the vehicle 100, the controller 130 of the control module 110 may include the configurations described above. For example, when the ventilation control system 10 is configured by only the controller 220 of the operating terminal 200, the controller 220 of the operating terminal 200 may include the configurations described above.

In the embodiment, the location where the programs are stored may be changed. For example, programs implemented by the departure time estimation unit 351, the meteorological information obtainment unit 352, the ambient temperature obtainment unit 353, the passenger compartment temperature obtainment unit 354, the ventilation condition calculator 355, the ventilation start time determination unit 356, the ventilation determination unit 357, the notification unit 358, and the ventilation controller 359 may be application programs stored in the memory 250 of the operating terminal 200.

The controller 130 of the vehicle 100 and the controller 350 of the server 300 each include a memory that stores a program and an arithmetic processing circuit that runs the program and thus execute a software process. The operating terminal 200 includes the memory 250 storing a program and the controller 220 running the program and thus executes a software process. However, these are only examples. The controller 130 of the vehicle 100, the controller 350 of the server 300, and the operating terminal 200 may each include a dedicated hardware circuit (e.g., ASIC) that processes some of the software processes executed in the embodiment. More specifically, the controller 130 of the vehicle 100, the controller 350 of the server 300, and the operating terminal 200 may each have any one of the following configurations (a) to (c). Configuration (a) includes a processor that executes all of the above-described processes in accordance with programs and a program storage device such as a memory that stores the programs. Configuration (b) includes a processor and a program storage device that execute some of the above-described processes in accordance with the programs and a dedicated hardware circuit that executes the remaining processes. Configuration (c) includes a dedicated hardware circuit that executes all of the above-described processes. A plurality of software circuits each including a processor and a program storage device and a plurality of dedicated hardware circuits may be provided. More specifically, the above-described processes may be executed by processing circuitry that includes at least one of one or more software circuits or one or more dedicated hardware circuits. The program storage device, or a computer readable medium, includes any medium that is accessible by a general-purpose computer or a dedicated computer.

Various changes in form and details may be made to the examples above without departing from the scope of the claims. The examples are for the sake of description only, and not for purposes of limitation. The scope of the invention is defined by the claims.

## Claims

1. A ventilation control system (10), comprising processing circuitry, wherein the processing circuitry includes
a meteorological information obtainment unit (352) configured to obtain meteorological information,
a ventilation determination unit (357) configured to determine whether a vehicle (100) needs to be ventilated based on the meteorological information,
a ventilation controller (359) configured to output an operation request signal for requesting operation of a ventilation device (170) that ventilates the vehicle (100), and
a notification unit (358) configured to output a notification inquiring whether to permit or reject ventilation when the ventilation determination unit (357) determines that the vehicle (100) needs to be ventilated, wherein
the ventilation controller (359) is configured to output the operation request signal when a reply to the notification indicates that the ventilation is permitted,
the ventilation controller (359) is configured not to output the operation request signal when a reply to the notification indicates that the ventilation is rejected even when the ventilation determination unit (357) determines that the vehicle (100) needs to be ventilated,
a departure time estimation unit (351) configured to estimate a departure time of the vehicle (100),
a ventilation condition calculator (355) configured to calculate an operation condition of the ventilation device (170) and a ventilation period for which the ventilation device (170) performs ventilation, and
a ventilation start time determination unit (356) configured to determine a ventilation start time at which the ventilation device (170) starts ventilation, that is a time earlier than the departure time by the ventilation period,
an ambient temperature obtainment unit (353) configured to obtain an ambient temperature of the vehicle (100) at the departure time, the ventilation control system (10) being **characterized in that** the processing circuitry further includes
a passenger compartment temperature obtainment unit (354) configured to obtain a passenger compartment temperature of the vehicle (100) at the departure time,
and **in that** the ventilation condition calculator (355) is configured to calculate the ventilation period allowing a difference between the ambient temperature at the departure time and the passenger compartment temperature at the departure time to be within a preset specified temperature difference.

2. The ventilation control system (10) according to claim 1, wherein the notification unit (358) is configured to output a notification inquiring whether to permit or reject ventilation in a predetermined time before the ventilation start time.

3. The ventilation control system (10) according to any one of claims 1 or 2, further comprising:
a server (300) configured to collect and store information on the vehicle (100); and
a control module (110) installed on the vehicle (100), wherein
the server (300) and the control module (110) are connected by an external communication network (400), and
the server (300) includes the ventilation controller (359).

4. The ventilation control system (10) according to any one of claims 1 to 3, wherein the ventilation device (170) includes a power window device configured to open and close a window of the vehicle (100).

5. A ventilation control program that, when running in one or more computers of the ventilation control system (10) of any one of the previous claims, causes the ventilation control system (10) to execute
a departure time estimation process that estimates a departure time of a vehicle (100), a meteorological information obtaining process that obtains meteorological information, an ambient temperature obtainment process that obtains an ambient temperature of the vehicle (100) at the departure time,
a passenger compartment temperature obtainment process that obtains a passenger compartment temperature of the vehicle (100) at the departure time,
a ventilation determining process that determines whether the vehicle (100) needs to be ventilated based on the meteorological information,
a ventilation condition calculation process that calculates an operation condition of the ventilation device (170) and a ventilation period for which the ventilation device (170) performs ventilation to allow a difference between the ambient temperature at the departure time and the passenger compartment temperature at the departure time to be within a preset specified temperature difference
a ventilation start time determination process that determines a ventilation start time at which the ventilation device (170) starts ventilation, that is a time earlier than the departure time by the ventilation period,
a ventilation controlling process that outputs an operation request signal for requesting operation of a ventilation device (170) configured to ventilate the vehicle (100), and
a notifying process that outputs a notification inquiring whether to permit or reject ventilation when the ventilation determining process determines that the vehicle (100) needs to be ventilated, wherein
the ventilation controlling process includes a process that outputs the operation request signal when a reply to the notification indicates that the ventilation is permitted, and
the ventilation controlling process includes a process that does not output the operation request signal when a reply to the notification indicates that the ventilation is rejected even when the ventilation determining process determines that vehicle (100) needs to be ventilated.

6. A method for controlling the ventilation control system (10) according to any one of the claims 1 to 4, the method comprising:
estimating a departure time of a vehicle (100),
obtaining meteorological information;
obtaining an ambient temperature of the vehicle (100) at the departure time,
obtaining a passenger compartment temperature of the vehicle (100) at the departure time,
temporarily determining whether to ventilate the vehicle (100) based on the meteorological information;
calculating an operation condition of the ventilation device (170) and a ventilation period for which the ventilation device (170) performs ventilation to allow a difference between the ambient temperature at the departure time and the passenger compartment temperature at the departure time to be within a preset specified temperature difference,
determining a ventilation start time at which the ventilation device (170) starts ventilation, that is a time earlier than the departure time by the ventilation period,
inquiring of an operating terminal (200) of a user whether to permit or reject ventilation when it is temporarily determined to ventilate the vehicle (100); and determining to ventilate the vehicle (100) when the ventilation is permitted.

## Patentansprüche

1. Lüftungssteuerungssystem (10), umfassend eine Verarbeitungsschaltung, wobei die Verarbeitungsschaltung beinhaltet
eine Einheit (352) zum Erhalten von meteorologischen Informationen, die dazu ausgestaltet ist, meteorologische Informationen zu erhalten,
eine Einheit (357) zur Lüftungsbestimmung, die dazu ausgestaltet ist, auf Grundlage der meteorologischen Informationen zu bestimmen, ob ein Fahrzeug (100) belüftet werden muss,
ein Lüftungssteuergerät (359), das dazu ausgestaltet ist, ein Betriebsanforderungssignal zum Anfordern des Betriebs einer Lüftungsvorrichtung (170), die das Fahrzeug (100) belüftet, auszugeben und
eine Benachrichtigungseinheit (358), die dazu ausgestaltet ist, eine Benachrichtigung auszugeben, die abfragt, ob die Lüftung erlaubt oder abgewiesen werden soll, wenn die Einheit (357) zur Lüftungsbestimmung bestimmt, dass das Fahrzeug (100) belüftet werden muss, wobei
das Lüftungssteuergerät (359) dazu ausgestaltet ist, das Betriebsanforderungssignal auszugeben, wenn eine Antwort auf die Benachrichtigung darauf hinweist, dass die Belüftung erlaubt ist,
das Lüftungssteuergerät (359) dazu ausgestaltet ist, das Betriebsanforderungssignal nicht auszugeben, wenn eine Antwort auf die Benachrichtigung darauf hinweist, dass die Belüftung abgewiesen wird, selbst wenn die Einheit (357) zur Lüftungsbestimmung bestimmt, dass das Fahrzeug (100) belüftet werden muss,
eine Einheit (351) zur Abschätzung der Abfahrtszeit, die dazu ausgestaltet ist, eine Abfahrtszeit des Fahrzeugs (100) abzuschätzen,
einen Lüftungsbedingungs-Rechner (355), der dazu ausgestaltet ist, eine Betriebsbedingung der Lüftungsvorrichtung (170) und eine Lüftungszeitdauer zu berechnen, für welche die Lüftungsvorrichtung (170) die Lüftung durchführt, und
eine Einheit (356) zur Bestimmung der Lüftungsstartzeit, die dazu ausgestaltet ist, eine Lüftungsstartzeit zu bestimmen, zu welcher die Lüftungsvorrichtung (170) die Lüftung startet, und die eine um die Lüftungszeitdauer vor der Abfahrtszeit liegende Zeit ist,
eine Einheit (353) zum Erhalten einer Umgebungstemperatur, die dazu ausgestaltet ist, eine Umgebungstemperatur des Fahrzeugs (100) zu der Abfahrtszeit zu erhalten,
wobei das Lüftungssteuerungssystem (10) **dadurch gekennzeichnet ist,**
**dass** die Verarbeitungsschaltung ferner eine Einheit (354) zum Erhalten der Fahrgastraum-Temperatur beinhaltet, die dazu ausgestaltet ist, eine Fahrgastraum-Temperatur des Fahrzeugs (100) zu der Abfahrtszeit zu erhalten, und
**dass** der Lüftungsbedingungs-Rechner (355) dazu ausgestaltet ist, die Lüftungszeitdauer so zu berechnen, dass eine Differenz zwischen der Umgebungstemperatur zu der Abfahrtszeit und der Fahrgastraum-Temperatur zu der Abfahrtszeit innerhalb einer voreingestellten spezifischen Temperaturdifferenz liegen darf.

2. Lüftungssteuerungssystem (10) nach Anspruch 1, wobei die Benachrichtigungseinheit (358) dazu ausgestaltet ist, in einer vorbestimmten Zeit vor der Lüftungs-Startzeit eine Benachrichtigung auszugeben, die abfragt, ob die Lüftung erlaubt oder abgewiesen werden soll.

3. Lüftungssteuerungssystem (10) nach einem der Ansprüche 1 oder 2, ferner umfassend:
einen Server (300), der dazu ausgestaltet ist, Informationen über das Fahrzeug (100) zu sammeln und zu speichern, und
ein Steuermodul (110), das in dem Fahrzeug (100) installiert ist, wobei
der Server (300) und das Steuermodul (110) durch ein externes Kommunikationsnetzwerk (400) verbunden sind, und
der Server (300) das Lüftungs-Steuergerät (359) beinhaltet.

4. Lüftungssteuerungssystem (10) nach einem der Ansprüche 1 bis 3, wobei die Lüftungsvorrichtung (170) eine angetriebene Fensterhebevorrichtung beinhaltet, die dazu ausgestaltet ist, ein Fenster des Fahrzeugs (100) zu öffnen und zu schließen.

5. Lüftungssteuerungsprogramm, das, wenn es auf einem oder mehreren Computern des Lüftungssteuerungssystems (10) nach einem der vorhergehenden Ansprüche läuft, das Lüftungssteuerungssystem (10) veranlasst, auszuführen
einen Prozess zur Abschätzung einer Abfahrtszeit, der eine Abfahrtszeit eines Fahrzeugs (100) abschätzt,
einen Prozess zum Erhalten von meteorologischen Informationen, der meteorologische Informationen erhält,
einen Prozess zum Erhalten einer Umgebungstemperatur, der eine Umgebungstemperatur des Fahrzeugs (100) zu der Abfahrtszeit erhält,
einen Prozess zum Erhalten einer Fahrgastraum-Temperatur, der eine Fahrgastraum-Temperatur des Fahrzeugs (100) zu der Abfahrtszeit erhält,
einen Prozess zur Lüftungsbestimmung, der auf Grundlage der meteorologischen Informationen bestimmt, ob das Fahrzeug (100) belüftet werden muss,
einen Prozess zur Berechnung einer Lüftungsbedingung, der eine Betriebsbedingung der Lüftungsvorrichtung (170) und eine Lüftungszeitdauer, für welche die Lüftungsvorrichtung (170) die Lüftung durchführt, berechnet, um zu erlauben, dass eine Differenz zwischen der Umgebungstemperatur zu der Abfahrtszeit und der Fahrgastraum-Temperatur zu der Abfahrtszeit innerhalb einer voreingestellten spezifischen Temperaturdifferenz liegen darf,
einen Prozess zur Bestimmung der Lüftungsstartzeit, der eine Lüftungsstartzeit bestimmt, zu welcher die Lüftungsvorrichtung (170) die Lüftung startet, und die eine um die Lüftungszeitdauer vor der Abfahrtszeit liegende Zeit ist,
einen Prozess zur Lüftungssteuerung, der ein Betriebsanforderungssignal ausgibt, um den Betrieb einer Lüftungsvorrichtung (170) anzufordern, welche dazu ausgestaltet ist, das Fahrzeug (100) zu belüften, und
einen Benachrichtigungsprozess, der eine Benachrichtigung ausgibt, die abfragt, ob die Lüftung erlaubt oder abgewiesen werden soll, wenn der Prozess zur Lüftungsbestimmung bestimmt, dass das Fahrzeug (100) belüftet werden muss, wobei
der Prozess zur Lüftungssteuerung einen Prozess beinhaltet, der das Betriebsanforderungssignal ausgibt, wenn eine Antwort auf die Benachrichtigung darauf hinweist, dass die Belüftung erlaubt ist, und
der Prozess zur Lüftungssteuerung einen Prozess beinhaltet, der das Betriebsanforderungssignal nicht ausgibt, wenn eine Antwort auf die Benachrichtigung darauf hinweist, dass die Belüftung abgewiesen wird, selbst wenn die der Prozess zur Lüftungsbestimmung bestimmt, dass das Fahrzeug (100) belüftet werden muss.

6. Verfahren zum Steuern des Lüftungssteuerungssystems (10) nach einem der Ansprüche 1 bis 4, wobei das Verfahren umfasst:
Abschätzen einer Abfahrtszeit eines Fahrzeugs (100),
Erhalten von meteorologischen Informationen,
Erhalten einer Umgebungstemperatur des Fahrzeugs (100) zu der Abfahrtszeit,
Erhalten einer Fahrgastraum-Temperatur des Fahrzeugs (100) zu der Abfahrtszeit,
temporäres Bestimmen, ob das Fahrzeug (100) belüftet werden soll, auf Grundlage der meteorologischen Informationen,
Berechnen einer Betriebsbedingung der Lüftungsvorrichtung (170) und einer Lüftungszeitdauer, für welche die Lüftungsvorrichtung (170) die Lüftung durchführt, um zu erlauben, dass eine Differenz zwischen der Umgebungstemperatur zu der Abfahrtszeit und der Fahrgastraum-Temperatur zu der Abfahrtszeit innerhalb einer voreingestellten spezifischen Temperaturdifferenz liegen darf,
Bestimmen einer Lüftungsstartzeit, zu welcher die Lüftungsvorrichtung (170) die Lüftung startet, und die eine um die Lüftungszeitdauer vor der Abfahrtszeit liegende Zeit ist,
Abfragen eines Bedienungsendgeräts (200) eines Benutzers, ob die Lüftung erlaubt oder abgewiesen werden soll, wenn temporär bestimmt wird, dass das Fahrzeug (100) belüftet werden soll, und
Bestimmen, das Fahrzeug (100) zu belüften, wenn die Lüftung erlaubt wird.

## Revendications

1. Système de commande de ventilation (10), comprenant une circuiterie de traitement, dans lequel la circuiterie de traitement comprend
une unité d'obtention d'information météorologique (352) configurée pour obtenir de l'information météorologique,
une unité de détermination de ventilation (357) configurée pour déterminer si un véhicule (100) doit être ventilé sur la base de l'information météorologique,
un régulateur de ventilation (359) configuré pour délivrer un signal de demande de fonctionnement pour demander un fonctionnement d'un dispositif de ventilation (170) qui ventile le véhicule (100), et
une unité de notification (358) configurée pour délivrer une notification qui demande s'il faut permettre ou rejeter une ventilation quand l'unité de détermination de ventilation (357) détermine que le véhicule (100) doit être ventilé,
le régulateur de ventilation (359) étant configuré pour délivrer le signal de demande de fonctionnement quand une réponse à la notification indique que la ventilation est permise,
le régulateur de ventilation (359) étant configuré pour ne pas délivrer le signal de demande de fonctionnement quand une réponse à la notification indique que la ventilation est rejetée même lorsque l'unité de détermination de ventilation (357) détermine que le véhicule (100) doit être ventilé,
une unité d'estimation d'heure de départ (351) configurée pour estimer une heure de départ du véhicule (100),
un calculateur de condition de ventilation (355) configuré pour calculer une condition de fonctionnement du dispositif de ventilation (170) et une période de ventilation pendant laquelle le dispositif de ventilation (170) réalise une ventilation, et
une unité de détermination d'heure de début de ventilation (356) configurée pour déterminer une heure de début de ventilation à laquelle le dispositif de ventilation (170) commence la ventilation, qui est une heure précédant l'heure de départ par la période de ventilation,
une unité d'obtention de température ambiante (353) configurée pour obtenir une température ambiante du véhicule (100) à l'heure de départ, le système de commande de ventilation (10) étant **caractérisé en ce que** la circuiterie de traitement comprend en outre
une unité d'obtention de température de cabine de passagers (354) configurée pour obtenir une température de cabine de passagers du véhicule (100) à l'heure de départ,
et **en ce que** le calculateur de condition de ventilation (355) est configuré pour calculer la période de ventilation permettant à une différence entre la température ambiante à l'heure de départ et la température de cabine de passagers à l'heure de départ d'être dans une différence de température spécifiée préétablie.

2. Système de commande de ventilation (10) selon la revendication 1, dans lequel l'unité de notification (358) est configurée pour délivrer une notification qui demande s'il faut permettre ou rejeter une ventilation dans un temps prédéterminé avant l'heure de début de ventilation.

3. Système de commande de ventilation (10) selon l'une quelconque des revendications 1 ou 2, comprenant en outre :
un serveur (300) configuré pour collecter et stocker de l'information sur le véhicule (100) ; et
un module de commande (110) installé sur le véhicule (100), dans lequel
le serveur (300) et le module de commande (110) sont reliés par un réseau de communication externe (400), et
le serveur (300) comprend le régulateur de ventilation (359).

4. Système de commande de ventilation (10) selon l'une quelconque des revendications 1 à 3, dans lequel le dispositif de ventilation (170) comprend un dispositif de lève-vitre motorisé configuré pour ouvrir et fermer une vitre du véhicule (100).

5. Programme de commande de ventilation qui, lorsqu'il tourne dans un ou plusieurs ordinateurs du système de commande de ventilation (10) selon l'une quelconque des revendications précédentes, amène le système de commande de ventilation (10) à exécuter
un processus d'estimation d'heure de départ qui estime une heure de départ d'un véhicule (100),
un processus d'obtention d'information météorologique qui obtient de l'information météorologique,
un processus d'obtention de température ambiante qui obtient une température ambiante du véhicule (100) à l'heure de départ,
un processus d'obtention de température de cabine de passagers qui obtient une température de cabine de passagers du véhicule (100) à l'heure de départ,
un processus de détermination de ventilation qui détermine si le véhicule (100) doit être ventilé sur la base de l'information météorologique,
un processus de calcul de condition de ventilation qui calcule une condition de fonctionnement du dispositif de ventilation (170) et une période de ventilation pendant laquelle le dispositif de ventilation (170) réalise une ventilation pour permettre à une différence entre la température ambiante à l'heure de départ et la température de cabine de passagers à l'heure de départ d'être dans une différence de température spécifiée préétablie,
un processus de détermination d'heure de début de ventilation qui détermine une heure de début de ventilation à laquelle le dispositif de ventilation (170) commence une ventilation, qui est un temps précédant l'heure de départ par la période de ventilation,
un processus de commande de ventilation qui délivre un signal de demande de fonctionnement destiné à demander un fonctionnement d'un dispositif de ventilation (170) configuré pour ventiler le véhicule (100), et
un processus de notification qui délivre une notification qui demande s'il faut permettre ou rejeter une ventilation quand le processus de détermination de ventilation détermine que le véhicule (100) doit être ventilé,
le processus de commande de ventilation comprenant un processus qui délivre le signal de demande de fonctionnement quand une réponse à la notification indique que la ventilation est permise, et
le processus de commande de ventilation comprenant un processus qui ne délivre pas le signal de demande de fonctionnement quand une réponse à la notification indique que la ventilation est rejetée même lorsque le processus de détermination de ventilation détermine que le véhicule (100) doit être ventilé.

6. Procédé de commande du système de commande de ventilation (10) selon l'une quelconque des revendications 1 à 4, le procédé comprenant le fait de :
estimer une heure de départ d'un véhicule (100),
obtenir de l'information météorologique ;
obtenir une température ambiante du véhicule (100) à l'heure de départ,
obtenir une température de cabine de passagers du véhicule (100) à l'heure de départ,
déterminer temporairement s'il faut ventiler le véhicule (100) sur la base de l'information météorologique ;
calculer une condition de fonctionnement du dispositif de ventilation (170) et une période de ventilation pendant laquelle le dispositif de ventilation (170) réalise la ventilation pour permettre à une différence entre la température ambiante à l'heure de départ et la température de cabine de passagers à l'heure de départ d'être dans une différence de température spécifiée préétablie,
déterminer une heure de début de ventilation à laquelle le dispositif de ventilation (170) commence la ventilation, qui est un temps précédant l'heure de départ par la période de ventilation,
demander par un terminal de fonctionnement (200) à un utilisateur s'il faut permettre ou rejeter la ventilation quand il est temporairement déterminé qu'il faut ventiler le véhicule (100) ; et
déterminer qu'il faut ventiler le véhicule (100) quand la ventilation est autorisée.
